# EUROPEAN PATENT APPLICATION

(11) **EP 4 704 173 A1**
(43) Date of publication of application: **04.03.2026**
(21) Application number: 23958132.5
(22) Date of filing: 07.12.2023
(51) Int. Cl.: H01M 4/139, H01M 4/13, H01M 10/0525, D01D 5/00

(54) **PREPARATION METHOD FOR LITHIUM-SUPPLEMENTED ELECTRODE SHEET, LITHIUM-SUPPLEMENTED ELECTRODE SHEET, AND BATTERY**

(30) Priority: 10.11.2023 CN 202311513423
(71) Applicant: Eve Power Co., Ltd., Jingmen, Hubei 448000 (CN)
(72) Inventor: FAN, Jinqiang, Jingmen, Hubei 448000 (CN); DING, Renyi, Jingmen, Hubei 448000 (CN); ZHANG, Kunpeng, Jingmen, Hubei 448000 (CN); JIANG, Qianrong, Jingmen, Hubei 448000 (CN)
(74) Representative: Nederlandsch Octrooibureau
(86) International application number: PCT/CN2023/137296
(87) International publication number: WO 2025/097533

(57) **Abstract**

A preparation method for a lithium-supplemented electrode sheet, a lithium-supplemented electrode sheet, and a battery. The preparation method comprises: mixing a lithium source and a conductive agent, and adding a first solution to obtain a lithium-supplemented spinning solution; mixing a first high molecular polymer and a first solvent to obtain a second solution; using an electro-static spinning method to coat the surface of a substrate sequentially with the lithium-supplemented spinning solution and the second solution to obtain a prefabricated electrode sheet; and carrying out thermal compounding treatment on the prefabricated electrode sheet to obtain a lithium-supplemented electrode sheet.

## Description

### CROSS-REFERENCE TO RELATED APPLICATION

This application claims priority to Chinese patent application No. 202311513423.9, filed with China National Intellectual Property Administration on November 10, 2023, the entire contents of which are incorporated herein by reference.

### FIELD

The present disclosure relates to the field of lithium-ion batteries, and more particularly, to a preparation method for a lithium-supplemented electrode sheet, a battery electrode sheet, and a battery.

### BACKGROUND

Currently, lithium supplementation for a lithium-ion battery is mainly divided into positive electrode lithium supplementation and negative electrode lithium supplementation. Positive electrode lithium supplementation involves adding a small amount of lithium-rich additives and binary lithium compounds in a preparation process of a positive electrode slurry. During the first charge, lithium in the lithium-containing compounds is deintercalated to compensate for an irreversible capacity loss during the first charge. For example, a passivated lithium powder slurry is coated on a surface of a positive electrode active material. A passivated lithium layer is obtained after drying and rolling. This method coats the positive electrode slurry and the lithium-supplemented slurry separately, resulting in a complex process. Also, more inactive substances such as a binder need to be used, which may affect improvement of a battery energy density.

Negative electrode lithium supplementation mainly includes three methods. The first method is physical mixing lithium supplementation, which involves attaching lithium metal foil and lithium metal powder to a surface of a negative electrode active material layer through methods such as rolling and coating, and completing the negative electrode prelithiation through self-discharge or an action of pulse current. For example, lithium metal is laminated onto a surface of a negative electrode sheet to obtain a laminated negative electrode sheet. However, a problem of wrinkling of the negative electrode sheet is prone to occur in the attachment process of the lithium metal foil and the negative electrode sheet. For example, a slurry containing the lithium metal powder is coated on the surface of the negative electrode active material layer to prepare a lithium-rich negative electrode sheet. The second method is chemical lithium supplementation, which involves performing a prelithiation treatment on the negative electrode sheet using a lithiating reagent. For example, the lithium metal is added to an aromatic organic solvent under an inert atmosphere to react to obtain an aryllithium reagent, and then the negative electrode sheet is immersed in the aryllithium reagent for a lithiation reaction. Finally, a prelithiated negative electrode is obtained after washing and drying. This method has a relatively complex process, and a degree of prelithiation thereof is not easy to control. The third method is electrochemical prelithiation, which involves introducing a third electrode into the battery and forming a counter electrode with the negative electrode and a lithium metal third electrode to complete prelithiation through charge and discharge. For example, a lithium-supplemented electrode is placed in an airbag containing an electrolyte after cell packaging as the lithium-supplemented electrode. The negative electrode is spot-connected to the lithium-supplemented electrode for discharge to achieve negative electrode lithium supplementation. This method can alleviate problems such as a high battery weight and a low energy density caused by the third electrode, which, however, is only applicable to a pouch battery and not to a prismatic battery and a cylindrical battery.

Therefore, how to alleviate the above-mentioned defects in the battery lithium supplementation process while simplifying a manufacturing process of a lithium-supplemented battery is of great significance for application of the lithium-ion battery.

### SUMMARY

### Technical problem

The present disclosure provides a preparation method for a lithium-supplemented electrode sheet, a battery electrode sheet, and a battery. Based on an electrostatic spinning method, a lithium-supplemented layer and a separator layer are sequentially formed at a substrate, and the separator layer and the lithium-supplemented layer are laminated to realize integration of the electrode sheet, the lithium-supplemented layer, and the separator layer. In this way, not only can lithium supplementation for the battery be performed, but also a battery preparation efficiency can be improved. Also, problems in the lithium supplementation process of the related art, such as easy wrinkling of the electrode sheet during attachment process of the lithium-supplemented material and the electrode sheet, an adverse effect on a battery thickness, and a complex process, can be solved.

### Technical solution

In a first aspect, an embodiment of the present disclosure provides a preparation method for a lithium-supplemented electrode sheet. The preparation method includes: mixing a lithium source with a conductive agent, and adding the mixture to a first solution, to obtain a lithium-supplemented spinning solution; mixing a first polymer with a first solvent to obtain a second solution; sequentially distributing, by electrostatic spinning, the lithium-supplemented spinning solution and the second solution on a surface of a substrate to form a lithium-supplemented layer and at least one separator layer stacked in sequence, to obtain a prefabricated electrode sheet; and performing a thermal lamination treatment on the prefabricated electrode sheet to obtain the lithium-supplemented electrode sheet.

In a second aspect, an embodiment of the present disclosure provides a lithium-supplemented electrode sheet prepared by the preparation method according to the first aspect. The lithium-supplemented electrode sheet includes a substrate. The lithium-supplemented layer and the separator layer are sequentially stacked on at least one surface of the substrate. The lithium-supplemented layer has a fibrous structure.

In a third aspect, an embodiment of the present disclosure provides a battery. The battery includes a positive electrode sheet and a negative electrode sheet. The positive electrode sheet or the negative electrode sheet is the lithium-supplemented electrode sheet according to the second aspect.

### Beneficial effect

Beneficial effects of the present disclosure are as follows.

With the preparation method for the lithium-supplemented electrode sheet, the lithium-supplemented electrode sheet, and the battery according to the present disclosure, based on the electrostatic spinning technology, the lithium-supplemented layer and the separator layer are sequentially formed on the surface of the electrode sheet, which can precisely control a degree of lithium supplementation, simplify a manufacturing process, and avoid wrinkles during the attachment process of the lithium-supplemented material and an electrode sheet substrate. Further, the formed lithium-supplemented layer has a fibrous structure, which is beneficial to reducing a battery weight and improving an energy density. Meanwhile, compositing the electrode sheet substrate, the lithium-supplemented layer, and the separator layer can reduce a thickness of the lithium-supplemented layer and a thickness of the separator layer, and realize the integration of the electrode sheet, the lithium-supplemented layer, and the separator layer, which can replace a separate battery separator. Therefore, the battery preparation process can be simplified, and thus the battery preparation efficiency can be improved.

### BRIEF DESCRIPTION OF THE DRAWINGS

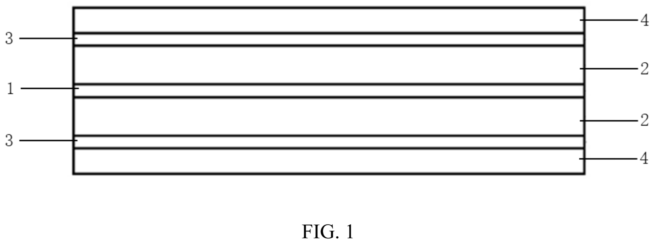

FIG. 1 is a schematic structural diagram of a lithium-supplemented electrode sheet according to Example 1 of the present disclosure.

1-current collector; 2-active material layer; 3-lithium-supplemented layer; 4-separator layer.

### DETAILED DESCRIPTION

It should be understood that the terms "first" and "second" are only used for descriptive purposes, and cannot be understood as indicating or implying relative importance or implicitly indicating the number of indicated technical features. Therefore, the features associated with "first" and "second" may explicitly or implicitly include one or more of the features. In the description of the present disclosure, unless otherwise specified, "plurality" means two or more.

With the electrostatic spinning method of the present disclosure, a lithium-supplemented layer and a separator layer are sequentially formed on a surface of an electrode sheet, which can precisely control a degree of lithium supplementation, simplify a manufacturing process, and avoid wrinkles during attachment process of a lithium-supplemented material and an electrode sheet substrate. Further, the formed lithium-supplemented layer has a fibrous structure, which is beneficial to reducing a battery weight and improving an energy density. Meanwhile, compositing the electrode sheet substrate, the lithium-supplemented layer, and the separator layer can reduce a thickness of the lithium-supplemented layer and a thickness of the separator layer, and realize integration of the electrode sheet, the lithium-supplemented layer, and the separator layer, which can replace a separate battery separator. Therefore, the battery preparation process can be simplified, and thus a battery preparation efficiency can be improved.

When the lithium-supplemented layer and the separator layer are each independently and sequentially disposed on two opposite side surfaces of the substrate in the present disclosure, the lithium-supplemented layer and the separator layer are sequentially formed on one side surface of two opposite side surfaces of the substrate using the electrostatic spinning method, then the lithium-supplemented layer and the separator layer are sequentially formed on the other side surface of two opposite side surfaces of the substrate using the electrostatic spinning method, and finally a thermal lamination treatment is performed to obtain the lithium-supplemented electrode sheet.

In an embodiment, in step (I), a mass ratio of the lithium source, the conductive agent, and the first solution is 100:(5 to 50):(100 to 300). For example, the mass ratio may be 100:50:300, 50:20:100, 100:5:250, 100:30:200, 50:10:120, 100:10:150, 50:15:100, 100:45:255, or 20:9:50. However, the mass ratio is not limited to the above listed values, and other unlisted values within this numerical range are also applicable.

In an embodiment, the lithium source includes any one of or a combination of at least two of Li₅FeO₄, Li₂NiO₂, Li₂OHCl, Li₂MoO₃, LiFeBO₃, Li₂FeSiO₄, Li₂CuO₂, Li₂O₂, Li₂O, Li₃N, LiN₃, Li₃P, lithium metal powder, or lithium alloy powder.

It should be noted that in the present disclosure, when the lithium-supplemented electrode sheet is used as a positive electrode sheet, the lithium source includes any one of or a combination of at least two of Li₅FeO₄, Li₂NiO₂, Li₂OHCl, Li₂MoO₃, LiFeBO₃, Li₂FeSiO₄, Li₂CuO₂, Li₂O₂, Li₂O, Li₃N, LiN₃, or Li₃P. When the lithium-supplemented electrode sheet is used as a negative electrode sheet, the lithium source includes the lithium metal powder and/or the lithium alloy powder. The lithium alloy powder includes, but is not limited to, lithium-aluminum alloy, lithium-magnesium alloy, lithium-titanium alloy, and the like.

In an embodiment, the conductive agent includes any one of or a combination of at least two of graphite, Ketjen black, acetylene black, carbon nanotubes, or graphene.

In an embodiment, in step (I), the first solution includes a second polymer and a second solvent.

In an embodiment, a mass ratio of the second polymer to the solvent is (5 to 60):100. For example, the mass ratio may be 5:100, 10:100, 15:100, 20:100, 25:100, 30:100, 35:100, 40:100, 45:100, 50:100, or 60:100. However, the mass ratio is not limited to the above listed values, and other unlisted values within this numerical range are also applicable.

In an embodiment, the second polymer includes any one of or a combination of at least two of aramid, PBI (Polybenzimidazoles), PI (Polyimide), PEI (Polyetherimide), PES (Polyethersulfone), PAN (Polyacrylonitrile), PS (Polystyrene), PVDF (Polyvinylidene Difluoride), PVDF-HFP (Poly(vinylidene fluoride-co-hexafluoropropylene)), PU (Polyurethane), EVOH (Ethylene-Vinyl Alcohol Copolymer), PET (Polyethylene glycol terephthalate), PBT (Polybutylene terephthalate), PMMA (Polymethyl methacrylate), PC (Polycarbonate), poly(n-butyl methacrylate), or PCL (Polycaprolactone).

In an embodiment, the second solvent includes any one of or a combination of at least two of DMF (N,N-Dimethylformamide), DMAc (Dimethylacetamide), DMSO (Dimethyl sulfoxide), THF (Tetrahydrofuran), NMP (N-Methylpyrrolidone), AC (acetone cyanohydrin), DCM (Dichloromethane), or water.

In an embodiment, the substrate includes a current collector coated with an active material layer. The substrate may be the positive electrode sheet or the negative electrode sheet.

It should be noted that, in the present disclosure, when the lithium-supplemented electrode sheet is used as the positive electrode sheet, an aluminum foil current collector and a positive electrode active material layer may be used, and the lithium-supplemented spinning solution is distributed on a surface of the positive electrode active material layer to form a positive electrode lithium-supplemented layer. When the lithium-supplemented electrode sheet is used as the negative electrode sheet, a copper foil current collector and a negative electrode active material layer may be used, and the lithium-supplemented spinning solution is distributed on a surface of the negative electrode active material layer to form a negative electrode lithium-supplemented layer. Both the positive electrode active material layer and the negative electrode active material layer are made of materials well known to those skilled in the art.

Exemplarily, the present disclosure provides preparation methods for the positive electrode sheet and the negative electrode sheet as follows.

The positive electrode sheet is prepared by uniformly dispersing a binder, a conductive agent, and a positive electrode active material, followed by attaching the mixture to two side surfaces of the aluminum foil current collector. A specific preparation process thereof includes the following steps. ① The binder is dissolved in a solvent to obtain a glue solution; ② The conductive agent and the positive electrode active material are uniformly dispersed in the above-mentioned glue solution to obtain a positive electrode slurry; ③ The positive electrode slurry is coated on two side surfaces of the aluminum foil current collector, and drying in an oven is performed; ④ The dried electrode sheet is rolled to control a thickness of the electrode sheet to range from 120 µm to 200 µm, obtaining the positive electrode sheet. The binder may be PVDF. The solvent may be NMP. The conductive agent may include graphite, Ketjen black, acetylene black, carbon nanotubes, graphene, and the like. The positive electrode active material may include lithium iron phosphate, lithium nickel cobalt manganese oxide, lithium cobalt oxide, lithium manganese oxide, lithium-rich manganese-based material, lithium nickel cobalt aluminum oxide, lithium nickel manganese oxide, and the like. A mass ratio of the positive electrode active material, the conductive agent, and the binder is 100:(0.5 to 10):(0.5 to 8).

The negative electrode sheet is prepared by uniformly dispersing the binder, the conductive agent, and a negative electrode active material, followed by attaching the mixture to two side surfaces of the copper foil current collector. A specific preparation process thereof includes the following steps. ① The binder is dissolved in a solvent to obtain a glue solution; ② The conductive agent and the negative electrode active material are uniformly dispersed in the above-mentioned glue solution to obtain a negative electrode slurry; ③ The negative electrode slurry is coated on two side surfaces of the copper foil current collector, and drying in an oven is performed; ① The dried electrode sheet is rolled to control a thickness of the electrode sheet to range from 80 µm to 150 µm, obtaining the negative electrode sheet. The binder includes SBR, CMC, PAA, and the like. The solvent is pure water. The conductive agent includes graphite, Ketjen black, acetylene black, carbon nanotubes, graphene, and the like. The negative electrode active material includes a carbon-based material, a silicon-based material, or a tin-based material. The carbon-based material may include graphite (such as natural graphite and artificial graphite), non-graphitizable carbon (soft carbon, hard carbon), and the like. The silicon-based material may include elemental silicon, silicon-based alloys, silicon oxides, or silicon-carbon composites. The tin-based material may include elemental tin, tin alloys, and the like. A mass ratio of the negative electrode active material, the conductive agent, and the binder is 100:(0.5 to 10):(0.5 to 8).

In an embodiment, in step (II), a mass ratio of the first polymer to the first solvent is (10 to 25):100. For example, the mass ratio may be 10:100, 11:100, 12:100, 15:100, 16:100, 18:100, 20:100, 22:100, 24:100, or 25:100. However, the mass ratio is not limited to the above listed values, and other unlisted values within this numerical range are also applicable.

In an embodiment, the first polymer includes any one of or a combination of at least two of aramid, PBI, PI, PEI, PES, PAN, PS, PVDF, PVDF-HFP, PU, EVOH, PET, PBT, PVP (Polyvinyl pyrrolidone), or PVA (Polyvinyl alcohol).

In an embodiment, the first solvent includes any one of or a combination of at least two of DMF, DMAc, DMSO, THF, NMP, AC, DCM, or water.

In an embodiment, in step (III), a spinning voltage of the lithium-supplemented spinning solution ranges from 10 kV to 35 Kv. For example, the spinning voltage of the lithium-supplemented spinning solution may be 10 kV, 12 kV, 14 kV, 15 kV, 18 kV, 20 kV, 25 kV, 28 kV, 30 kV, 32 kV, or 35 kV. However, the spinning voltage of the lithium-supplemented spinning solution is not limited to the above listed values, and other unlisted values within this numerical range are also applicable.

In an embodiment, a supply rate of the lithium-supplemented spinning solution ranges from 0.8 mL/h to 8 mL/h. For example, the supply rate of the lithium-supplemented spinning solution may be 0.8 mL/h, 1 mL/h, 1.2 mL/h, 1.5 mL/h, 2 mL/h, 2.2 mL/h, 2.5 mL/h, 3 mL/h, 4 mL/h, 5 mL/h, 6 mL/h, 7 mL/h, 7.2 mL/h, 7.5 mL/h, 7.8 mL/h, or 8 mL/h. However, the supply rate of the lithium-supplemented spinning solution is not limited to the above listed values, and other unlisted values within this numerical range are also applicable.

In an embodiment, a receiving distance of the lithium-supplemented spinning solution ranges from 10 cm to 50 cm. For example, the receiving distance of the lithium-supplemented spinning solution may be 10 cm, 15 cm, 18 cm, 20 cm, 23 cm, 25 cm, 30 cm, 32 cm, 35 cm, 40 cm, 45 cm, 48 cm, or 50 cm. However, the receiving distance of the lithium-supplemented spinning solution is not limited to the above listed values, and other unlisted values within this numerical range are also applicable.

In an embodiment, a thickness of the lithium-supplemented layer ranges from 1 µm to 10 µm. For example, the thickness of the lithium-supplemented layer may be 1 µm, 2 µm, 3 µm, 4 µm, 5 µm, 6 µm, 7 µm, 8 µm, 9 µm, or 10 µm. However, the thickness of the lithium-supplemented layer is not limited to the above listed values, and other unlisted values within this numerical range are also applicable.

In an embodiment, in step (III), a spinning voltage of the second solution ranges from 15 kV to 65 kV. For example, the spinning voltage of the second solution may be 15 kV, 18 kV, 20 kV, 25 kV, 28 kV, 30 kV, 32 kV, 35 kV, 40 kV, 42 kV, 45 kV, 50 kV, 53 kV, 55 kV, 60 kV, 62 kV, or 65 kV. However, the spinning voltage of the second solution is not limited to the above listed values, and other unlisted values within this numerical range are also applicable.

In an embodiment, a supply rate of the second solution ranges from 1 mL/h to 10 mL/h. For example, the supply rate of the second solution may be 1 mL/h, 1.2 mL/h, 1.5 mL/h, 2 mL/h, 2.4 mL/h, 2.5 mL/h, 3 mL/h, 4 mL/h, 5 mL/h, 6 mL/h, 7 mL/h, 7.5 mL/h, 8 mL/h, 8.5 mL/h, 9 mL/h, 9.5 mL/h, or 10 mL/h. However, the supply rate of the second solution is not limited to the above listed values, and other unlisted values within this numerical range are also applicable.

In an embodiment, a receiving distance of the second solution ranges from 10 cm to 40 cm. For example, the receiving distance of the second solution may be 10 cm, 12 cm, 15 cm, 16 cm, 18 cm, 20 cm, 23 cm, 25 cm, 30 cm, 32 cm, 35 cm, or 40 cm. However, the receiving distance of the second solution is not limited to the above listed values, and other unlisted values within this numerical range are also applicable.

In an embodiment, a thickness of the at least one separator layer ranges from 5 µm to 30 µm. For example, the thickness of the at least one separator layer may be 5 µm, 6 µm, 8 µm, 10 µm, 15 µm, 18 µm, 20 µm, 24 µm, 25 µm, 26 µm, 28 µm, or 30 µm. However, the thickness of the at least one separator layer is not limited to the above listed values, and other unlisted values within this numerical range are also applicable.

In an embodiment, in step (IV), the thermal lamination treatment is performed through hot roller pressing.

In an embodiment, a temperature of the thermal lamination treatment ranges from 25°C to 100°C. For example, the temperature of the thermal lamination treatment may be 25°C, 30°C, 35°C, 40°C, 45°C, 50°C, 55°C, 60°C, 65°C, 70°C, 75°C, 80°C, 85°C, 90°C, 95°C, or 100°C. However, the temperature of the thermal lamination treatment is not limited to the above listed values, and other unlisted values within this numerical range are also applicable.

In an embodiment, a pressure of the thermal lamination treatment ranges from 1 MPa to 10 MPa. For example, the pressure of the thermal lamination treatment may be 1 MPa, 2 MPa, 3 MPa, 4 MPa, 5 MPa, 6 MPa, 7 MPa, 8 MPa, 9 MPa, or 10 MPa. However, the pressure of the thermal lamination treatment is not limited to the above listed values, and other unlisted values within this numerical range are also applicable.

In an embodiment, a rolling speed of the thermal lamination treatment ranges from 5 m/min to 100 m/min. For example, the rolling speed of the thermal lamination treatment may be 5 m/min, 8 m/min, 10 m/min, 15 m/min, 20 m/min, 25 m/min, 30 m/min, 40 m/min, 50 m/min, 60 m/min, 70 m/min, 80 m/min, 90 m/min, 95 m/min, or 100 m/min. However, the rolling speed of the thermal lamination treatment is not limited to the above listed values, and other unlisted values within this numerical range are also applicable.

The hot roller pressing in the present disclosure uses a rolling technology well known to those skilled in the art. That is, the prefabricated electrode sheet is placed between two hot press rollers for hot pressing. In this way, a bonding force between a fibrous lithium-supplemented layer, the separator layer, and the substrate can be further enhanced, making the fibrous lithium-supplemented layer, the separator layer, and the substrate be bonded together more firmly. Also, a spacing between fibers can be compressed to reduce the thickness of the lithium-supplemented layer and the thickness of the separator layer, realizing the integration of the electrode sheet, the lithium-supplemented layer, and the separator layer.

In an embodiment, a thickness of the lithium-supplemented layer ranges from 1 µm to 10 µm. For example, the thickness of the lithium-supplemented layer may be 1 µm, 2 µm, 3 µm, 4 µm, 5 µm, 6 µm, 7 µm, 8 µm, 9 µm, or 10 µm. However, the thickness of the lithium-supplemented layer is not limited to the above listed values, and other unlisted values within this numerical range are also applicable.

In an embodiment, a thickness of the separator layer ranges from 5 µm to 30 µm. For example, the thickness of the separator layer may be 5 µm, 6 µm, 8 µm, 10 µm, 15 µm, 18 µm, 20 µm, 24 µm, 25 µm, 26 µm, 28 µm, or 30 µm. However, the thickness of the separator layer is not limited to the above listed values, and other unlisted values within this numerical range are also applicable.

A battery of the present disclosure may be in the following two forms. (1) The positive electrode sheet uses the lithium-supplemented electrode sheet, and the negative electrode sheet uses a conventional negative electrode sheet. A lithium-ion battery is prepared by winding or laminating the lithium-supplemented positive electrode sheet and the negative electrode sheet to realize positive electrode lithium supplementation of the lithium-ion battery. (2) The negative electrode sheet uses the aforementioned lithium-supplemented electrode sheet, and the positive electrode sheet uses a conventional positive electrode sheet. The lithium-ion battery is prepared by winding or laminating the positive electrode sheet and the lithium-supplemented negative electrode sheet to realize negative electrode lithium supplementation of the lithium-ion battery. The conventional positive electrode sheet and the conventional negative electrode sheet refer to electrode sheets including a current collector and an active material layer that is coated on a surface of the current collector. An electrode sheet well known to those skilled in the art may be used. The present disclosure is not limited in this regard.

The numerical ranges described in the present disclosure include not only the above-listed point values but also any point values between the above numerical ranges that are not listed. Due to space limitations and for the sake of conciseness, the present disclosure does not exhaustively list all specific point values included in the ranges.

It should be noted that a conventional positive electrode sheet involved in the following examples is prepared by uniformly dispersing PVDF, carbon nanotubes, and lithium iron phosphate, followed by attaching the mixture to two side surfaces of the aluminum foil current collector. A mass ratio of the lithium iron phosphate, the carbon nanotubes, and PVDF is 100:2.6:4.5. A graphite negative electrode sheet involved in the following examples is prepared by uniformly dispersing SBR, Ketjen black, and graphite, followed by attaching the mixture to two side surfaces of the copper foil current collector. A mass ratio of the graphite, the Ketjen black, and SBR is 100:3:4.5.

### Example 1

Example 1 provided a lithium-supplemented electrode sheet and a preparation method thereof. The method included the following steps.
(1) According to a mass ratio of NMP:PVDF=100:10, PVDF was taken and dissolved in NMP to prepare a first solution. Subsequently, according to a mass ratio of lithium metal powder:conductive carbon black: first solution=50:20:100, the lithium metal powder and conductive carbon black were dispersed in the first solution to obtain a lithium-supplemented spinning solution.
(2) According to a mass ratio of DMF:PES=100:12, PES was taken and dissolved in DMF to obtain a second solution.
(3) The lithium-supplemented spinning solution was transferred into a liquid supply container of a propulsion device of an electrostatic spinning apparatus. A conventional graphite negative electrode sheet was selected as a substrate. A liquid supply rate was set to 2.0 mL/h. A receiving distance was set to 20 cm. A spinning voltage was set to 15 kV. Electrostatic spinning was performed on one side surface of the graphite negative electrode sheet substrate. A lithium-supplemented layer 3 having a thickness of 5 µm was obtained by controlling a spinning time.
(4) The second solution was transferred into the liquid supply container of the propulsion device of the electrostatic spinning apparatus. A negative electrode sheet with the fibrous lithium-supplemented layer 3 obtained in step (3) was used as a receiving substrate. A liquid supply rate was set to 2.4 mL/h. A receiving distance was set to 16 cm. A spinning voltage was set to 20 kV. Electrostatic spinning was performed. A separator layer 4 having a thickness of 30 µm was formed by controlling a spinning time.
(5) Steps (1) to (4) were repeated. Electrostatic spinning was performed on the other side surface of the graphite negative electrode sheet substrate. The lithium-supplemented layer 3 and the separator layer 4 were sequentially formed to obtain a prefabricated electrode sheet.
(6) The prefabricated electrode sheet was placed between two hot press rollers of a hot roller. A temperature of an upper hot press roller and a temperature of a lower hot press roller were both set to 90°C. A rolling pressure was set to 2 MPa. A rolling speed was set to 10 m/min. A thermal lamination treatment was performed on the prefabricated electrode sheet to obtain a lithium-supplemented negative electrode sheet.

The lithium-supplemented negative electrode sheet includes the graphite negative electrode sheet substrate, and the lithium-supplemented layer 3 and the separator layer 4 that are each independently disposed on two side surfaces of the graphite negative electrode sheet substrate, realizing the integration of the electrode sheet, the lithium-supplemented layer, and the separator layer. As illustrated in FIG. 1, the graphite negative electrode sheet substrate includes a current collector 1 and active material layers 2 coated on two side surfaces of the current collector 1.

### Example 2

Example 2 provided a lithium-supplemented electrode sheet and a preparation method thereof. The method included the following steps.
(1) According to a mass ratio of NMP:PVDF=100:25, PVDF-HFP was taken and dissolved in DMAc to prepare a first solution. Subsequently, according to a mass ratio of lithium-aluminum alloy powder:Ketjen black:first solution=100:10:250, the lithium-aluminum alloy powder and Ketjen black were dispersed in the first solution to obtain a lithium-supplemented spinning solution.
(2) According to a mass ratio of water:PVP=100:18, PVP was taken and dissolved in water to obtain a second solution.
(3) The lithium-supplemented spinning solution was transferred into the liquid supply container of the propulsion device of the electrostatic spinning apparatus. The conventional graphite negative electrode sheet was selected as a substrate. A liquid supply rate was set to 1 mL/h. A receiving distance was set to 25 cm. A spinning voltage was set to 25 kV. Electrostatic spinning was performed on one side surface of the graphite negative electrode sheet substrate. A lithium-supplemented layer 3 having a thickness of 2 µm was obtained by controlling a spinning time.
(4) The second solution was transferred into the liquid supply container of the propulsion device of the electrostatic spinning apparatus. A negative electrode sheet with the fibrous lithium-supplemented layer 3 obtained in step (3) was used as a receiving substrate. A liquid supply rate was set to 5 mL/h. A receiving distance was set to 10 cm. A spinning voltage was set to 40 kV. Electrostatic spinning was performed. A separator layer 4 having a thickness of 15 µm was formed by controlling a spinning time.
(5) Steps (1) to (4) were repeated. Electrostatic spinning was performed on the other side surface of the graphite negative electrode sheet substrate. The lithium-supplemented layer 3 and the separator layer 4 were sequentially formed to obtain a prefabricated electrode sheet.
(6) The prefabricated electrode sheet was placed between the two hot press rollers of the hot roller. A temperature of the upper hot press roller and a temperature of the lower hot press roller were both set to 75°C. A rolling pressure was set to 10 MPa. A rolling speed was set to 5 m/min. Thermal lamination treatment was performed on the prefabricated electrode sheet to obtain a lithium-supplemented negative electrode sheet.

The lithium-supplemented negative electrode sheet includes the graphite negative electrode sheet substrate, and the lithium-supplemented layer 3 and the separator layer 4 that are each independently disposed on two side surfaces of the graphite negative electrode sheet substrate, realizing the integration of the electrode sheet, the lithium-supplemented layer, and the separator layer. The graphite negative electrode sheet substrate includes a current collector 1 and active material layers 2 coated on two side surfaces of the current collector 1.

### Example 3

Example 3 provided a lithium-supplemented electrode sheet and a preparation method thereof. The method included the following steps.
(1) According to a mass ratio of DCM:PAN=100:25, PAN was taken and dissolved in DCM to prepare a first solution. Subsequently, according to a mass ratio of lithium metal powder:acetylene black:first solution=100:50:300, the lithium metal powder and acetylene black were dispersed in the first solution to obtain a lithium-supplemented spinning solution.
(2) According to a mass ratio of DMF:PVDF=100:25, PVDF was taken and dissolved in DMF to obtain a second solution.
(3) The lithium-supplemented spinning solution was transferred into the liquid supply container of the propulsion device of the electrostatic spinning apparatus. A conventional graphite negative electrode sheet was selected as a substrate. A liquid supply rate was set to 6 mL/h. A receiving distance was set to 20 cm. A spinning voltage was set to 35 kV. Electrostatic spinning was performed on one side surface of the graphite negative electrode sheet substrate. A lithium-supplemented layer 3 having a thickness of 8 µm was obtained by controlling a spinning time.
(4) The second solution was transferred into the liquid supply container of the propulsion device of the electrostatic spinning apparatus. A negative electrode sheet with the fibrous lithium-supplemented layer 3 obtained in step (3) was used as a receiving substrate. A liquid supply rate was set to 4 mL/h. A receiving distance was set to 35 cm. A spinning voltage was set to 45 kV. Electrostatic spinning was performed. A separator layer 4 having a thickness of 20 µm was formed by controlling a spinning time.
(5) Steps (1) to (4) were repeated. Electrostatic spinning was performed on the other side surface of the graphite negative electrode sheet substrate. The lithium-supplemented layer 3 and the separator layer 4 were sequentially formed to obtain a prefabricated electrode sheet.
(6) The prefabricated electrode sheet was placed between the two hot press rollers of the hot roller. A temperature of the upper hot press roller and a temperature of the lower hot press roller were both set to 80°C. A rolling pressure was set to 5 MPa. A rolling speed was set to 6 m/min. Thermal lamination treatment was performed on the prefabricated electrode sheet to obtain a lithium-supplemented negative electrode sheet.

The lithium-supplemented negative electrode sheet includes the graphite negative electrode sheet substrate, and the lithium-supplemented layer 3 and the separator layer 4 that are each independently disposed on two side surfaces of the graphite negative electrode sheet substrate, realizing the integration of the electrode sheet, the lithium-supplemented layer, and the separator layer. The graphite negative electrode sheet substrate includes a current collector 1 and active material layers 2 coated on two side surfaces of the current collector 1.

### Example 4

Example 4 provided a lithium-supplemented electrode sheet and a preparation method thereof. The method included the following steps.
(1) According to a mass ratio of DMF:PET=100:45, PET was taken and dissolved in DMF to prepare a first solution. Subsequently, according to a mass ratio of Li₂NiO₂:carbon nanotubes:first solution=100:45:240, Li₂NiO₂ and carbon nanotubes were dispersed in the first solution to obtain a lithium-supplemented spinning solution.
(2) According to a mass ratio of DMF:PET=100:20, PET was taken and dissolved in DMF to obtain a second solution.
(3) The lithium-supplemented spinning solution was transferred into the liquid supply container of the propulsion device of the electrostatic spinning apparatus. A conventional positive electrode sheet was selected as a substrate. A liquid supply rate was set to 5 mL/h. A receiving distance was set to 30 cm. A spinning voltage was set to 35 kV. Electrostatic spinning was performed on one side surface of the positive electrode sheet substrate. A lithium-supplemented layer 3 having a thickness of 10 µm was obtained by controlling a spinning time.
(4) The second solution was transferred into the liquid supply container of the propulsion device of the electrostatic spinning apparatus. A positive electrode sheet with the fibrous lithium-supplemented layer 3 obtained in step (3) was used as a receiving substrate. A liquid supply rate was set to 10 mL/h. A receiving distance was set to 20 cm. A spinning voltage was set to 65 kV. Electrostatic spinning was performed. A separator layer 4 having a thickness of 18 µm was formed by controlling a spinning time.
(5) Steps (1) to (4) were repeated. Electrostatic spinning was performed on the other side surface of the conventional positive electrode sheet substrate. The lithium-supplemented layer 3 and the separator layer 4 were sequentially formed to obtain a prefabricated electrode sheet.
(6) The prefabricated electrode sheet was placed between the two hot press rollers of the hot roller. A temperature of the upper hot press roller and a temperature of the lower hot press roller were both set to 60°C. A rolling pressure was set to 8 MPa. A rolling speed was set to 10 m/min. Thermal lamination treatment was performed on the prefabricated electrode sheet to obtain a lithium-supplemented positive electrode sheet.

The lithium-supplemented positive electrode sheet includes the positive electrode sheet substrate, and the lithium-supplemented layer 3 and the separator layer 4 that are each independently disposed on two side surfaces of the positive electrode sheet substrate, realizing the integration of the electrode sheet, the lithium-supplemented layer, and the separator layer. The positive electrode sheet substrate includes a current collector 1 and active material layers 2 coated on two side surfaces of the current collector 1.

### Example 5

Example 5 provided a lithium-supplemented electrode sheet and a preparation method thereof. The method included the following steps.
(1) According to a mass ratio of DMSO:PEI=100:35, PEI was taken and dissolved in DMSO to prepare a first solution. Subsequently, according to a mass ratio of LiN₃:graphene:first solution=100:45:120, LiN₃ and graphene were dispersed in the first solution to obtain a lithium-supplemented spinning solution.
(2) According to a mass ratio of DCM:PVDF-HFP=100:20, PVDF-HFP was taken and dissolved in DCM to obtain a second solution.
(3) The lithium-supplemented spinning solution was transferred into the liquid supply container of the propulsion device of the electrostatic spinning apparatus. A conventional positive electrode sheet was selected as a substrate. A liquid supply rate was set to 0.8 mL/h. A receiving distance was set to 12 cm. A spinning voltage was set to 10 kV. Electrostatic spinning was performed on one side surface of the positive electrode sheet substrate. A lithium-supplemented layer 3 having a thickness of 3 µm was obtained by controlling a spinning time.
(4) The second solution was transferred into the liquid supply container of the propulsion device of the electrostatic spinning apparatus. A positive electrode sheet with the fibrous lithium-supplemented layer 3 obtained in step (3) was used as a receiving substrate. A liquid supply rate was set to 2 mL/h. A receiving distance was set to 10 cm. A spinning voltage was set to 15 kV. Electrostatic spinning was performed. A separator layer 4 having a thickness of 6 µm was formed by controlling a spinning time.
(5) Steps (1) to (4) were repeated. Electrostatic spinning was performed on the other side surface of the conventional positive electrode sheet substrate. The lithium-supplemented layer 3 and the separator layer 4 were sequentially formed to obtain a prefabricated electrode sheet.
(6) The prefabricated electrode sheet was placed between the two hot press rollers of the hot roller. A temperature of the upper hot press roller and a temperature of the lower hot press roller were both set to 45°C. A rolling pressure was set to 7 MPa. A rolling speed was set to 15 m/min. Thermal lamination treatment was performed on the prefabricated electrode sheet to obtain a lithium-supplemented positive electrode sheet.

The lithium-supplemented positive electrode sheet includes the positive electrode sheet substrate, and the lithium-supplemented layer 3 and the separator layer 4 that are each independently disposed on two side surfaces of the positive electrode sheet substrate, realizing the integration of the electrode sheet, the lithium-supplemented layer, and the separator layer. The positive electrode sheet substrate includes a current collector 1 and active material layers 2 coated on two side surfaces of the current collector 1.

### Example 6

Example 6 provided a lithium-supplemented electrode sheet and a preparation method thereof. The method included the following steps.
(1) According to a mass ratio of NMP:PMMA=100:40, PMMA was taken and dissolved in NMP to prepare a first solution. Subsequently, according to a mass ratio of Li₂O₂:carbon nanotubes:first solution=100:45:120, Li₂O₂ and carbon nanotubes were dispersed in the first solution to obtain a lithium-supplemented spinning solution.
(2) According to a mass ratio of DMAc:PEI=100:12, PEI was taken and dissolved in DMAc to obtain a second solution.
(3) The lithium-supplemented spinning solution was transferred into the liquid supply container of the propulsion device of the electrostatic spinning apparatus. A conventional positive electrode sheet was selected as a substrate. A liquid supply rate was set to 0.7 mL/h. A receiving distance was set to 30 cm. A spinning voltage was set to 28 kV. Electrostatic spinning was performed on one side surface of the positive electrode sheet substrate. A lithium-supplemented layer 3 having a thickness of 7 µm was obtained by controlling a spinning time.
(4) The second solution was transferred into the liquid supply container of the propulsion device of the electrostatic spinning apparatus. A positive electrode sheet with the fibrous lithium-supplemented layer 3 obtained in step (3) was used as a receiving substrate. A liquid supply rate was set to 3 mL/h. A receiving distance was set to 25 cm. A spinning voltage was set to 50 kV. Electrostatic spinning was performed. A separator layer 4 having a thickness of 28 µm was formed by controlling a spinning time.
(5) Steps (1) to (4) were repeated. Electrostatic spinning was performed on the other side surface of the conventional positive electrode sheet substrate. The lithium-supplemented layer 3 and the separator layer 4 were sequentially formed to obtain a prefabricated electrode sheet.
(6) The prefabricated electrode sheet was placed between the two hot press rollers of the hot roller. A temperature of the upper hot press roller and a temperature of the lower hot press roller were both set to 85°C. A rolling pressure was set to 4 MPa. A rolling speed was set to 30 m/min. Thermal lamination treatment was performed on the prefabricated electrode sheet to obtain a lithium-supplemented positive electrode sheet.

The lithium-supplemented positive electrode sheet includes the positive electrode sheet substrate, and the lithium-supplemented layer 3 and the separator layer 4 that are each independently disposed on two side surfaces of the positive electrode sheet substrate, realizing the integration of the electrode sheet, the lithium-supplemented layer, and the separator layer. The positive electrode sheet substrate includes a current collector 1 and active material layers 2 coated on two side surfaces of the current collector 1.

### Example 7

Example 7 provided a lithium-supplemented electrode sheet and a preparation method thereof. Example 7 differed from Example 1 in that Step (4) was repeated to form two separator layers 4 on a surface of the lithium-supplemented layer 3. All other operating conditions and process parameters were the same as those in Example 1.

### Example 8

Example 8 provided a battery. The battery included the lithium-supplemented negative electrode sheet provided in Example 1 and the conventional positive electrode sheet. The lithium-supplemented negative electrode sheet and the conventional positive electrode sheet were assembled into a battery cell in a laminated form. The battery cell was placed in a battery housing, and an electrolyte was injected into the assembly to complete the battery.

### Example 9

Example 9 provided a battery. The battery included the lithium-supplemented negative electrode sheet provided in Example 2 and the conventional positive electrode sheet. The lithium-supplemented negative electrode sheet and the conventional positive electrode sheet were assembled into the battery cell in the laminated form. The battery cell was placed in the battery housing, and the electrolyte was injected into the assembly to complete the battery.

### Example 10

Example 10 provided a battery. The battery included the lithium-supplemented negative electrode sheet provided in Example 3 and the conventional positive electrode sheet. The lithium-supplemented negative electrode sheet and the conventional positive electrode sheet were assembled into the battery cell in the laminated form. The battery cell was placed in the battery housing, and the electrolyte was injected into the assembly to complete the battery.

### Example 11

Example 11 provided a battery. The battery included the lithium-supplemented positive electrode sheet provided in Example 4 and the graphite negative electrode sheet. The lithium-supplemented positive electrode sheet and the graphite negative electrode sheet were assembled into the battery cell in the laminated form. The battery cell was placed in the battery housing, and the electrolyte was injected into the assembly to complete the battery.

### Example 12

Example 12 provided a battery. The battery included the lithium-supplemented positive electrode sheet provided in Example 5 and the graphite negative electrode sheet. The lithium-supplemented positive electrode sheet and the graphite negative electrode sheet were assembled into the battery cell in the laminated form. The battery cell was placed in the battery housing, and the electrolyte was injected into the assembly to complete the battery.

### Example 13

Example 13 provided a battery. The battery included the lithium-supplemented positive electrode sheet provided in Example 6 and the graphite negative electrode sheet. The lithium-supplemented positive electrode sheet and the graphite negative electrode sheet were assembled into the battery cell in the laminated form. The battery cell was placed in the battery housing, and the electrolyte was injected into the assembly to complete the battery.

### Example 14

Example 14 provided a battery. The battery included the lithium-supplemented negative electrode sheet provided in Example 7 and the conventional positive electrode sheet. The lithium-supplemented negative electrode sheet and the conventional positive electrode sheet were assembled into the battery cell in the laminated form. The battery cell was placed in the battery housing, and the electrolyte was injected into the assembly to complete the battery.

### Comparative Example 1

Comparative Example 1 provided a lithium-supplemented electrode sheet and a preparation method thereof. Comparative Example 1 differed from Example 1 in that in Step (3), a coating device was used to directly coat the lithium-supplemented spinning solution on the surface of the graphite negative electrode substrate. All other operating conditions and process parameters were the same as those in Example 1.

### Comparative Example 2

Comparative Example 2 provided a lithium-supplemented electrode sheet and a preparation method thereof. Comparative Example 2 differed from Example 1 in that in Step (4), the coating device was used to directly coat the second solution on the surface of the graphite negative electrode substrate. All other operating conditions and process parameters were the same as those in Example 1.

### Comparative Example 3

Comparative Example 3 provided an electrode sheet and a preparation method thereof. Comparative Example 3 differed from Example 1 in that the electrostatic spinning method was used to directly distribute the second solution on the surface of the graphite negative electrode substrate to form the separator layer 4, and no lithium-supplemented layer 3 was prepared. All other operating conditions and process parameters were the same as those in Example 1.

### Comparative Example 4

Comparative Example 4 provided a battery. The battery included the lithium-supplemented negative electrode sheet provided in Comparative Example 1 and the conventional positive electrode sheet. The lithium-supplemented negative electrode sheet and the conventional positive electrode sheet were assembled into the battery cell in the laminated form. The battery cell was placed in the battery housing, and the electrolyte was injected into the assembly to complete the battery.

### Comparative Example 5

Comparative Example 5 provided a battery. The battery included the lithium-supplemented negative electrode sheet provided in Comparative Example 2 and the conventional positive electrode sheet. The lithium-supplemented negative electrode sheet and the conventional positive electrode sheet were assembled into the battery cell in the laminated form. The battery cell was placed in the battery housing, and the electrolyte was injected into the assembly to complete the battery.

### Comparative Example 6

Comparative Example 6 provided a battery. The battery included the graphite negative electrode sheet provided in Comparative Example 3 and the conventional positive electrode sheet. The graphite negative electrode sheet and the conventional positive electrode sheet were assembled into the battery cell in the laminated form. The battery cell was placed in the battery housing, and the electrolyte was injected into the assembly to complete the battery.

### Comparative Example 7

Comparative Example 7 provided a battery. The battery included the graphite negative electrode sheet and the conventional positive electrode sheet. The graphite negative electrode sheet, a separator, and the conventional positive electrode sheet were assembled into the battery cell in the laminated form. The battery cell was placed in the battery housing, and the electrolyte was injected into the assembly to complete the battery.

In the present disclosure, the electrode sheets obtained in Examples 1 to 7 and Comparative Examples 1 to 3 were observed, and a thickness uniformity test was performed. A specific test method was described as follows.
(1) Before preparing the lithium-supplemented layer and the separator layer, detection points were defined on the surface of the substrate. A Mahr thickness gauge was used to directly test a thickness of each detection point on the substrate. Thicknesses of multiple detection points were tested, an average value of the thicknesses was calculated, and an average deviation (an absolute value) between each test value and the average value was computed, which was denoted as a first deviation and recorded. Results were shown in Table 1.
The first deviation was calculated as a sum of differences between a test value of each detection point and the average value, divided by the number of detection points.
(2) Detection points were defined at the same positions on the prepared lithium-supplemented electrode sheets. The Mahr thickness gauge was used to directly test the thickness of each point on the electrode sheet. The thicknesses of multiple points were tested, the average value of the thicknesses was calculated, and the average deviation between each test value and the average value was computed, which was denoted as a second deviation and recorded. Results were shown in Table 1.
The second deviation was calculated as the sum of differences between the test value of each detection point and the average value, divided by the number of detection points.
(3) Whether wrinkles appeared on the surface of the electrode sheets was observed. Results were shown in Table 1.

**Table 1**

| Serial number | First deviation (µm) | Second deviation (µm) | Wrinkles on surface of electrode sheet |
|---|---|---|---|
| Example 1 | 0.10 | 0.16 | No |
| Example 2 | 0.18 | 0.20 | No |
| Example 3 | 0.24 | 0.38 | No |
| Example 4 | 0.22 | 0.42 | No |
| Example 5 | 0.38 | 0.31 | No |
| Example 6 | 0.24 | 0.29 | No |
| Example 7 | 0.25 | 0.40 | No |
| Comparative Example 1 | 0.56 | 0.64 | No |
| Comparative Example 2 | 0.50 | 0.58 | Yes |
| Comparative Example 3 | 0.36 | 0.44 | No |

In the present disclosure, batteries of Examples 8 to 14 and Comparative Examples 4 to 7 were subjected to electrical performance tests. A specific test method was described as follows.
(1) Battery Internal Impedance Test: an alternating current impedance tester was used to measure an impedance of the battery, with a test frequency of 1000 Hz. Results were shown in Table 2.
(2) Cycling Performance Test: a 1C/1C cycling test was performed at a test temperature of 25°C. A specific capacity of a first cycle and a specific capacity after 500 cycles were recorded. A capacity retention rate after 500 cycles was obtained by dividing the specific capacity after 500 cycles by the specific capacity of the first cycle. Results were shown in Table 2.

**Table 2**

| Serial number | Battery internal impedance (mΩ) | Cycling retention rate (%) |
|---|---|---|
| Example 8 | 6.720 | 96.89 |
| Example 9 | 6.718 | 96.82 |
| Example 10 | 6.804 | 96.84 |
| Example 11 | 6.945 | 96.69 |
| Example 12 | 6.872 | 96.81 |
| Example 13 | 6.816 | 96.04 |
| Example 14 | 6.800 | 96.28 |
| Comparative Example 4 | 7.450 | 96.12 |
| Comparative Example 5 | 7.477 | 96.06 |
| Comparative Example 6 | 8.029 | 95.85 |
| Comparative Example 7 | 8.218 | 95.56 |

It can be seen from Table 1 that differences in thickness between the lithium-supplemented electrode sheets obtained in Examples 1 to 7 and the substrate at the same detection point are relatively average, and an average deviation of a thickness among the various detection points is relatively small. Therefore, after forming the lithium-supplemented layer 3 and the separator layer 4 on the surface of the substrate, the obtained lithium-supplemented electrode sheet still has high thickness uniformity, and no wrinkles occur after the attachment process.

The electrode sheets obtained in Comparative Examples 1 to 3 have good thickness uniformity. However, thickness values of each detection point of the electrode sheets in Comparative Examples 1 and 2 are higher than those of the lithium-supplemented electrode sheets obtained in Examples 1 to 7. The main reason is that the electrostatic spinning method adopted in Examples 1 to 7 can accurately control a spinning thickness of the lithium-supplemented layer 3 and a spinning thickness of the separator layer 4, and the obtained lithium-supplemented layer 3 has the fibrous structure, which can reduce a thickness of the coating layer.

It can be seen from Table 2 that the batteries of Examples 8 to 14 have low internal impedance and high cycling retention rate. The internal impedance of each of the batteries in Examples 8 to 10 is slightly lower than that of each of the batteries obtained in Examples 11 to 13. The main reason is that Examples 8 to 10 use the lithium-supplemented negative electrode sheet for negative electrode lithium supplementation, while Examples 11 to 13 use the lithium-supplemented positive electrode sheet for positive electrode lithium supplementation. Since no other substances remain after the lithium powder completes lithium supplementation, lithium ions in the lithium-supplemented negative electrode sheet have a short transmission path, making an effect of the lithium-supplemented negative electrode sheet slightly better than that of the lithium-supplemented positive electrode sheet.

Compared with the battery of Example 8, an internal impedance of each of the batteries obtained in Comparative Examples 4 and 5 is increased. The reason is that methods of forming the lithium-supplemented layer 3 and the separator layer 4 in the lithium-supplemented electrode sheets used in the batteries are different. The lithium-supplemented layer 3 of the lithium-supplemented electrode sheet used in Example 8 is prepared by the electrostatic spinning method, forming a fibrous lithium-supplemented layer 3, which can effectively reduce the thickness of the electrode sheet and thus lower an internal impedance of the battery.

When comparing Example 8 with Comparative Example 6, since the electrode sheet used in Comparative Example 6 does not form the lithium-supplemented layer 3, the battery is unable to achieve lithium supplementation during cycling, resulting in an increase in the internal impedance of the battery and a significant decrease in the cycling retention rate.

It is not difficult to see when comparing the battery of Example 8 with that of Comparative Example 7 that the battery of Example 8 uses the lithium-supplemented negative electrode sheet, which can realize the integration of the electrode sheet, the lithium-supplemented layer, and the separator layer, and can perform lithium supplementation on the battery. Also, the fibrous lithium-supplemented layer 3 is conducive to reducing the thickness of the electrode sheet, lowering the battery internal resistance, and thus improving the cycling retention rate of the battery. In addition, there is no need to provide an additional separator for battery lamination in Example 8, which can also improve the battery preparation efficiency.

## Claims

1. A preparation method for a lithium-supplemented electrode sheet, the preparation method comprising:
mixing a lithium source with a conductive agent, and adding the mixture to a first solution, to obtain a lithium-supplemented spinning solution;
mixing a first polymer with a first solvent to obtain a second solution;
sequentially distributing, by electrostatic spinning, the lithium-supplemented spinning solution and the second solution on a surface of a substrate to form a lithium-supplemented layer and at least one separator layer stacked in sequence, to obtain a prefabricated electrode sheet; and
performing a thermal lamination treatment on the prefabricated electrode sheet to obtain the lithium-supplemented electrode sheet.

2. The preparation method according to claim 1, wherein in the step of said mixing the lithium source with the conductive agent, and adding the mixture to the first solution, to obtain the lithium-supplemented spinning solution, a mass ratio of the lithium source, the conductive agent, and the first solution is 100:(5 to 50):(100 to 300),
preferably, the lithium source comprises any one of or a combination of at least two of LiₛFeO₄, Li₂NiO₂, Li₂OHCl, Li₂MoO₃, LiFeBO₃, Li₂FeSiO₄, Li₂CuO₂, Li₂O₂, Li₂O, Li₃N, LiN₃, Li₃P, lithium metal powder, or lithium alloy powder; and
preferably, the conductive agent comprises any one of or a combination of at least two of graphite, Ketjen black, acetylene black, carbon nanotubes, or graphene.

3. The preparation method according to claim 1 or 2, wherein in the step of said mixing the lithium source with the conductive agent, and adding the mixture to the first solution, to obtain the lithium-supplemented spinning solution, the first solution comprises a second polymer and a second solvent,
preferably, a mass ratio of the second polymer to the solvent is (5 to 60):100;
preferably, the second polymer comprises any one of or a combination of at least two of aramid, PBI, PI, PEI, PES, PAN, PS, PVDF, PVDF-HFP, PU, EVOH, PET, PBT, PMMA, PC, poly(n-butyl methacrylate), or PCL;
preferably, the second solvent comprises any one of or a combination of at least two of DMF, DMAc, DMSO, THF, NMP, AC, DCM, or water; and
preferably, the substrate comprises a current collector coated with an active material layer.

4. The preparation method according to any one of claims 1 to 3, wherein in the step of said mixing the first polymer with the first solvent to obtain the second solution, a mass ratio of the first polymer to the first solvent is (10 to 25): 100,
preferably, the first polymer comprises any one of or a combination of at least two of aramid, PBI, PI, PEI, PES, PAN, PS, PVDF, PVDF-HFP, PU, EVOH, PET, PBT, PVP, or PVA; and
preferably, the first solvent comprises any one of or a combination of at least two of DMF, DMAc, DMSO, THF, NMP, AC, DCM, or water.

5. The preparation method according to any one of claims 1 to 4, wherein in the step of said sequentially distributing, by electrostatic spinning, the lithium-supplemented spinning solution and the second solution on the surface of the substrate to form the lithium-supplemented layer and the at least one separator layer stacked in sequence, to obtain the prefabricated electrode sheet, a spinning voltage of the lithium-supplemented spinning solution ranges from 10 kV to 35 kV,
preferably, a supply rate of the lithium-supplemented spinning solution ranges from 0.8 mL/h to 8 mL/h;
preferably, a receiving distance of the lithium-supplemented spinning solution ranges from 10 cm to 50 cm; and
preferably, a thickness of the lithium-supplemented layer ranges from 1 µm to 10 µm.

6. The preparation method according to any one of claims 1 to 5, wherein in the step of said sequentially distributing, by electrostatic spinning, the lithium-supplemented spinning solution and the second solution on the surface of the substrate to form the lithium-supplemented layer and the at least one separator layer stacked in sequence, to obtain the prefabricated electrode sheet, a spinning voltage of the second solution ranges from 15 kV to 65 kV,
preferably, a supply rate of the second solution ranges from 1 mL/h to 10 mL/h;
preferably, a receiving distance of the second solution ranges from 10 cm to 40 cm; and
preferably, a thickness of the at least one separator layer ranges from 5 µm to 30 µm.

7. The preparation method according to any one of claims 1 to 6, wherein in the step of said performing the thermal lamination treatment on the prefabricated electrode sheet to obtain the lithium-supplemented electrode sheet, the thermal lamination treatment is performed through hot roller pressing,
preferably, a temperature of the thermal lamination treatment ranges from 25°C to 100°C;
preferably, a pressure of the thermal lamination treatment ranges from 1 MPa to 10 MPa; and
preferably, a rolling speed of the thermal lamination treatment ranges from 5 m/min to 100 m/min.

8. A lithium-supplemented electrode sheet, being prepared by the preparation method according to any one of claims 1 to 7, the lithium-supplemented electrode sheet comprising a substrate, wherein:
the lithium-supplemented layer and the separator layer are sequentially stacked on at least one surface of the substrate, and
the lithium-supplemented layer has a fibrous structure.

9. The lithium-supplemented electrode sheet according to claim 8, wherein:
a thickness of the lithium-supplemented layer ranges from 1 µm to 10 µm; and
preferably, a thickness of the separator layer ranges from 5 µm to 30 µm.

10. A battery, comprising:
a positive electrode sheet; and
a negative electrode sheet, wherein:
the positive electrode sheet or the negative electrode sheet is the lithium-supplemented electrode sheet according to claim 8 or 9.
